(19) **Europäisches Patentamt / European Patent Office / Office européen des brevets**

(11) **EP 1 649 632 B1**

(12) **EUROPEAN PATENT SPECIFICATION**

(45) Date of publication and mention
of the grant of the patent:
**14.12.2016 Bulletin 2016/50**

(51) Int Cl.:
**H04L 9/08** (2006.01)   **G02F 1/39** (2006.01)
**G02F 3/00** (2006.01)

(21) Application number: **04744004.5**

(86) International application number:
**PCT/IB2004/002344**

(22) Date of filing: **21.07.2004**

(87) International publication number:
**WO 2005/008952 (27.01.2005 Gazette 2005/04)**

(54) **GENERATOR OF PHOTON PAIRS USING PARAMETRIC FLUORESCENCE**

ERZEUGUNG VON PHOTONENPAAREN DURCH PARAMETRISCHE FLUORESZENZ

GÉNÉRATEUR DE PAIRES DE PHOTONS UTILISANT LA FLUORESCENCE PARAMÉTRIQUE

(84) Designated Contracting States:
**AT BE BG CH CY CZ DE DK EE ES FI FR GB GR HU IE IT LI LU MC NL PL PT RO SE SI SK TR**

(30) Priority: **22.07.2003 IT TO20030562**

(43) Date of publication of application:
**26.04.2006 Bulletin 2006/17**

(73) Proprietor: **Leonardo S.p.A.**
**Roma (IT)**

(72) Inventor: **BOVINO, Fabio, Antonio**
**I-16132 Genova (IT)**

(74) Representative: **Bergadano, Mirko et al**
**Studio Torta S.p.A.**
**Via Viotti, 9**
**10121 Torino (IT)**

(56) References cited:
**US-B1- 6 430 345**

• **CASTELLETTO S; GODONE A; NOVERO C; RASTELLO M: "Biphoton fields for quantum-efficiency measurements" METROLOGIA. BUR. INT. POIDS ET MESURES, vol. 32, no. 6, May 1996 (1996-05), pages 501-504, XP002298245 FRANCE ISSN: 0026-1394**
• **KWIAT P G; WAKS E; WHITE A G; APPELBAUM I; EBERHARD P H: "Ultrabright source of polarization-entangled photons" THE AMERICAN PHYSICAL SOCIETY - PHYSICAL REVIEW A - ATOMIC, MOLECULAR, AND OPTICAL PHYSICS, vol. 60, no. 2, August 1999 (1999-08), pages R773-R776, XP002298246 USA ISSN: 1050-2947**
• **YOON-HO KIM; KULIK S P; SHIH Y: "High-intensity pulsed source of space-time and polarization double-entangled photon pairs" THE AMERICAN PHYSICAL SOCIETY - PHYSICAL REVIEW A - ATOMIC, MOLECULAR, AND OPTICAL PHYSICS, vol. 62, no. 1, July 2000 (2000-07), pages 011802-1-011802-4, XP002298247 USA ISSN: 1050-2947**

**Description**

TECHNICAL FIELD

The present invention relates to a high-efficiency generator for generating pairs of photons, which may be used in a quantum process employing parametric fluorescence processes. The present invention also relates to a high-efficiency method of generating pairs of photons, which may be used in a quantum process employing parametric fluorescence processes.

BACKGROUND ART

As is known, one application of parametric fluorescence processes is quantum cryptography, which employs quantum physics principles to generate, transmit, and decode information at an extremely high security level.

Such processes comprise a number of steps, which include:

a) Creating a pair of entangled photons. This is done by exciting a birefringent non-linear (e.g. barium beta borate) crystal using a laser beam, in particular a pulsating laser beam, to create a pair of photons of the same frequency and opposite (vertical/horizontal) polarization.

b) Rough quantum transmission. The pairs of photons generated are transmitted by respective private transmission channels (e.g. optical fibres or vacuum) to a first and second user.

c) Random acquisition. Each user compares the single received photon with a first reference base (base A) and a second reference base (base B). Each reference base comprises two perpendicular axes, and the two bases are spaced angularly apart by a predetermined angle (e.g. 45°). The first base (base A) and the second base (base B) are selected at random and independently by the two users. Since polarization of the acquired photon may be parallel to a first or second axis of the base, the comparison gives a binary result (0, 1).

d) Public discussion. Over a public channel, the two users compare the type of base (base A, base B) used to make the comparison, but without exchanging the results of the comparison between the photon and the base. When the bases used for the comparison match, the results of the comparison by the two users are comparable. The results of the comparison made by the two users relative to the same pair of photons but with difference bases (bases A, B and B, A respectively) are therefore discarded to reduce the data set and form a set of "sifted" data relating solely to the results of the comparison made of the same pair of photons with the same base. Because of the quantum principle referred to above (each pair of photons has opposite polarizations), each result (0, 1) acquired by a first user must correspond to an opposite result (1, 0) acquired by the second user with the same base. Consequently, the sifted data acquired by the first user must be opposite (in the binary sense) to the data acquired by the second user.

e) Espionage test. The two users exchange subsets of sifted data over the public channel to ensure the data is actually correlated as described above. If it is, absolute security of the received data is acknowledged. If it is not, possible espionage of data transmission over the private channel is indicated. Any attempt, in fact, to measure and/or copy data transmitted over the private channel affects the polarization (vertical/horizontal) relationship of the pair, thus providing users with a clear espionage alert. Because of the impossibility of cloning or extracting quantum state information, quantum cryptography provides for generating a practically maximum-security user key.

f) Error correction. Both users assess the security of their code keys by making a parity check of certain subsets of sifted data over the public channel. For security reasons, this is done using very limited sets of data.

As regards the generation of pairs of entangled photons, this is normally done by a first power (e.g. 10W) laser exciting a second lower-power (e.g. 2.2W) laser, which in turn generates a laser (pump) beam which strikes the birefringent non-linear crystal.

A type-two birefringent crystal, however, is not particularly effective in generating pairs of entangled photons, so that known generators are inadequate for most practical applications.

The patent US6,430,345 discloses a method and a device for generating a choice of individual photons or photon pairs in an optical channel. The generation of this choice involves generating a two-photon state corresponding to a photon pair and spatially separating the photon pair while preserving the quantum-mechanical correlation, in the event the photons are emitted in a collinear manner. One photon is coupled into one optical channel each, the one channel containing an interferometer with variable optical path-length difference, and the other channel including an optical delay section having an optical length. The channels are spatially reunited through a beam splitter, and an adjustment of the optical path-length difference and of the optical length occurs in such a way that the probability K for coincidences between the outputs of the beam splitter is a choice of approximately K=0 or approximately K=1, or approximately a predetermined intermediate value, with K=0 corresponding to a photon pair in one of the output channels of the beam splitter, and K=1 corresponding to two individual photons in both output channels of the beam splitter. With this choice generation, an optical separating filter or gate can be implemented for a choice of one-photon or two-photon states, which is usable in quantum cryptography and as a basic element of a quantum-optical computing machine.

## DISCLOSURE OF INVENTION

It is an object of the present invention to provide a high-efficiency device for generating pairs of photons, which may be used in a quantum process employing parametric fluorescence processes.

According to the present invention, there is provided a high-efficiency generator for generating pairs of photons, which may be used in a quantum process employing parametric fluorescence processes, comprising: a type-one crystal receiving a laser pump beam at the input and generating pairs of photons of like polarization at the output; a first and a second polarization rotator, which respectively receive the photons in each generated pair, said polarization rotators each performing a rotation of 45°; a beam splitter, which reflects one polarization at its inputs, and transmits the other polarization; conveying means for directing the photons from the first and second polarization rotator to the inputs of said beam splitter; the state of the photons at the outputs of said beam splitter comprising a Bell state $\Phi^{(-)}$ which may be used, for example, in a quantum cryptography process.

The present invention also relates to a high-efficiency method of generating pairs of photons, which may be used in a quantum process employing parametric fluorescence processes, comprising the steps of: directing a laser pump beam onto a type-one crystal to generate pairs of photons of like polarization at the output of the crystal; directing the photons in each generated pair respectively to a first and second polarization rotator, each performing a rotation of 45°; and directing the photons from the first and second polarization rotator to the inputs of a beam splitter, which reflects one polarization and transmits the other polarization; the state of the photons at the outputs of said beam splitter comprising a Bell state $\Phi^{(-)}$ which may be used, for example, in a quantum cryptography process.

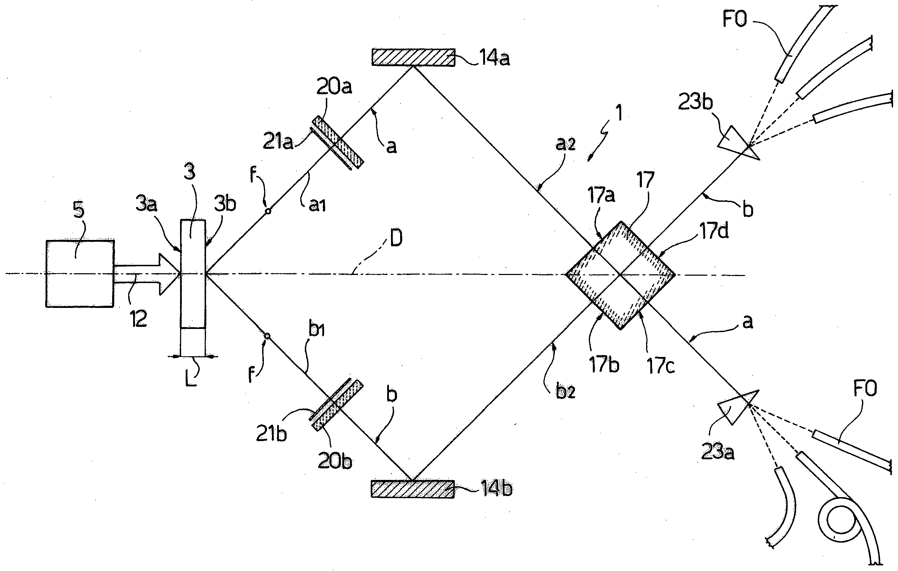

## BRIEF DESCRIPTION OF THE DRAWING

The invention will now be described with reference to the accompanying drawing which shows, schematically, a generator, in accordance with the teachings of the present invention, for generating pairs of photons, and which may be used in a quantum process employing parametric fluorescence processes.

## BEST MODE FOR CARRYING OUT THE INVENTION

Number 1 in the accompanying drawing indicates as a whole a high-efficiency generator for generating pairs of photons, which may be used in a quantum process employing parametric fluorescence processes, in particular a quantum cryptography process.

Generator 1 comprises a type-one crystal 3, in particular a parallelepiped-shaped, lithium iodate crystal of constant thickness L.

Crystal 3 is connected on a first side 3a to a known laser beam source 5 for generating an excitation laser beam (pump beam) 12 which strikes crystal 3 to produce pairs of photons f issuing from a second side 3b of crystal 3.

The pairs of photons generated at the output have the same polarization (i.e. both photons have vertical (e) or horizontal (o) polarization.

Laser beam 12 travels in a straight propagation direction D intersecting crystal 3.

As is known, the photons generated by interaction between laser pump beam 12 and type-one crystal 3 travel along paths which lie within a conical region symmetrical with respect to propagation direction D. More specifically, the intersection of the conical propagation region and a plane perpendicular to direction D defines an annulus representing the region in space in which the generated pairs of photons are most likely located.

Generator 1 comprises a first and a second reflecting element 14a, 14b (conveniently defined by plane metal mirrors) located on opposite sides of, and equally spaced with respect to, direction D.

Generator 1 also comprises a beam splitter 17 located along propagation direction D, on the opposite side of reflecting members 14a, 14b to crystal 3.

A first and a second photon in each generated pair travel along paths a, b, which respectively comprise:

- a first portion a1, b1 extending between second side 3b of crystal 3 and first and second reflecting element 14a, 14b respectively; and
- a second portion a2, b2 extending respectively from first and second reflecting element 14a, 14b to beam splitter 17, through which paths a and b extend.

Beam splitter 17, e.g. a cubic type, reflects one of the polarizations at the input (e.g. the vertical polarization), and lets the other polarization (e.g. the horizontal polarization) through.

First and second adjacent plane faces 17a, 17b of beam splitter 17 define first and second inputs of beam splitter 17, and are inclined at 45° with respect to propagation direction D: and third and fourth plane faces 17c, 17d, opposite faces 17a, 17b, define first and second outputs of beam splitter 17.

According to the present invention, a first and a second polarization rotator 20a, 20b are located along paths a and b, between crystal 3 and first and second reflecting element 14a, 14b, and intersect the photons travelling along first and second path portion a1, b1. Polarization rotators 20a, 20b (known) perform a 45° rotation, and are defined by flat plates perpendicular to first and second path portion a1, b1.

Polarization rotators 20a, 20b are conveniently fitted with irises 21a, 21b facing crystal 3 and having apertures in the order of a millimetre.

In actual use, the pair of photons generated by interaction between laser beam 12 and the crystal has, for example, the following state:

$$|1\rangle_{ao}\ |1\rangle_{bo} \qquad (1)$$

More specifically, the above (standard quantum mechanics) notation means that, in each pair, a first photon (notation |1) travels along path a (subscript a) and has horizontal polarization (subscript o), and a second photon (notation |1) travels along path b (subscript b) and also has horizontal polarization (subscript o).

The state of the pair of photons striking polarization rotators 20a, 20b is therefore:

$$|1\rangle_{ao}\ |1\rangle_{bo} \qquad (2)$$

The state of the photons at the output of the polarization rotators, on the other hand, is expressed by the notation:

$$\tfrac{1}{2}(|1\rangle_{ae}\ |1\rangle_{be}\ +\ |1\rangle_{ao}\ |1\rangle_{bo}\ -\ |1\rangle_{ae}\ |1\rangle_{bo}\ -\ |1\rangle_{ao}\ |1\rangle_{be})$$

$$(3)$$

That is, the pairs of photons at the output of the polarization rotators may be defined by vertical photons ($|1\rangle_{ae}$ $|1\rangle_{be}$), by horizontal photons ($|1\rangle_{ao}$ $|1\rangle_{bo}$), or by one vertical photon and one horizontal photon ($|1\rangle_{ae}$ $|1\rangle_{bo}$ and $|1\rangle_{ao}$ $|1\rangle_{be}$).

The photons of notation (3) state strike mirrors 14a, 14b, which do not alter their state, and which direct them to respective inputs 17a, 17b of beam splitter 17.

The state of the photons at outputs 17c, 17d of beam splitter 17 is expressed by the following notation:

$$\tfrac{1}{2}(|1\rangle_{ao}\ |1\rangle_{bo}\ -\ |1\rangle_{ae}\ |1\rangle_{be})\ -i/2(|1\rangle_{be}\ |1\rangle_{bo}+|1\rangle_{ae}\ |1\rangle_{ao})$$

$$(4)$$

where the first term:

$$\tfrac{1}{2}(|1\rangle_{ao}|1\rangle_{bo}\ -\ |1\rangle_{ae}\ |1\rangle_{be})\quad (5)$$

of notation (4) represents a Bell state $\Phi^{(-)}$ which, as is known, may be used in a quantum cryptography process.

The second term:

$$-i/2(|1\rangle_{be}\ |1\rangle_{bo}+|1\rangle_{ae}\ |1\rangle_{ao})\quad (6)$$

of notation (4) shows how the photons in the pair have opposite polarizations (e and o), but both travel along the same path (a or b), i.e. cannot be detected simultaneously by two detectors (not shown) communicating with the outputs of the respective paths. Notation **(6)** therefore simply constitutes a noise term, which can be discarded easily during the quantum cryptography process.

Notation (4) may therefore be rewritten:

$$\Phi^{(-)} + noise \ (7)$$

Though originally generated by a type-one crystal, the photons at the output of beam splitter 17 may therefore advantageously be used in a quantum cryptography process.

The same substantially also applies when starting with two photons of vertical polarization, i.e.:

$$|1>_{ae} \ |1>_{be} \qquad (1a)$$

Since the generation efficiency of a type-one crystal is greater than that of a type-two crystal by at least one order of magnitude, using a type-one crystal provides for obtaining a high-efficiency generator.

As compared with known generators employing a type-two birefringent crystal, a lower-power pump laser beam can therefore be used, with substantially the same photon pair generation efficiency.

The first and second outputs of beam splitter 17 may be connected to first and second prisms 23a, 23b for directing the photons at their outputs along paths inclined, with respect to the prisms, at an angle $\alpha$ depending on the wavelength of the photons. The outputs of prisms 23a, 23b may thus supply different communication channels (e.g. different optical fibres FO) having inputs in different angular positions with respect to prisms 23a, 23b to receive photons of different wavelengths. So modified, generator 1 may supply a number of channels.

## Claims

1. A high-efficiency generator for generating pairs of photons, which may be used in a quantum process employing parametric fluorescence processes, comprising:

   - a type-one crystal (3) receiving a laser pump beam (12) at the input and generating pairs of photons (f) of like polarization (e, o) at the output (3b) :
   - a first and a second polarization rotator (20a, 20b), which respectively receive the photons in each generated pair, said polarization rotators each performing a rotation of 45°;
   - a beam splitter (17), which reflects one polarization at its inputs (17a, 17b), and transmits the other polarization;
   - conveying means (14a, 14b) for directing the photons from the first and second polarization rotator (20a, 20b) to the inputs (17a, 17b) of said beam splitter (17);

   the state of the photons at the outputs (17c, 17d) of said beam splitter (17) comprising a Bell state $\Phi^{(-)}$ which may be used, for example, in a quantum cryptography process.

2. A generator as claimed in Claim 1, wherein said conveying means comprise first and second mirrors (14a, 14b) for reflecting the photons onto said beam splitter (17).

3. A generator as claimed in Claim 1 or 2, wherein first and second irises (21a, 21b) are connected to said polarization rotators (20a, 20b).

4. A generator as claimed in any one of the foregoing Claims, wherein the beam splitter has first and second outputs (17a, 17d) connected to first and second prisms (23a, 23b) for directing the photons at their outputs along paths inclined, with respect to the prisms, by an angle $\alpha$ depending on the wavelength of the photons; the outputs of the prisms supplying different communication channels having inputs in different angular positions with respect to the prisms to receive photons of different wavelengths.

5. A high-efficiency method of generating pairs of photons, which may be used in a quantum process employing parametric fluorescence processes, comprising the steps of:

   - directing a laser pump beam (12) onto a type-one crystal (3) to generate pairs of photons (f) of like polarization (e, o) at the output (3b) of the crystal;
   - directing the photons in each generated pair respectively to a first and second polarization rotator (20a, 20b), each performing a rotation of 45°;
- directing (14a, 14b) the photons from the first and second polarization rotator (20a, 20b) to the inputs (17a, 17b) of a beam splitter (17), which reflects one polarization and transmits the other polarization;

the state of the photons at the outputs of said beam splitter (17) comprising a Bell state $\Phi^{(-)}$ which may be used, for example, in a quantum cryptography process.

6. A method as claimed in Claim 5, wherein said step of directing the photons from the first and second polarization rotator (20a, 20b) comprises the step of reflecting (14a, 14b) the photons onto said beam splitter (17).

**Patentansprüche**

1. Ein Hocheffizienz-Generator zum Erzeugen von Paaren von Photonen, wobei die Paare von Photonen in einem Quantenprozess verwendet werden können, der parametrische Fluoreszenzprozesse nutzt, wobei der Generator Folgendes aufweist:

einen Typ-Eins Kristall (3), wobei der Kristall einen Laser Pumpstrahl (12) an dem Eingang empfängt und Paare von Photonen (f) ähnlicher Polarisation (e, o) an dem Ausgang (3b) erzeugt;
einen ersten und einen zweiten Polarisationsrotator (20a, 20b), welcher entsprechend die Photonen in jedem erzeugten Paar empfängt, wobei die Polarisationsrotatoren jeweils eine Drehung um 45° ausführen;
einen Strahlteiler (17), wobei der Strahlteiler eine Polarisation an seinen Eingängen (17a, 17b) reflektiert, und die andere Polarisation transmittiert;
Übertragungsmittel (14a, 14b) zum Richten der Photonen von dem ersten und zweiten Polarisationsrotator (20a, 20b) zu den Eingängen (17a, 17b) des Strahlteilers (17);
wobei der Zustand der Photonen an den Ausgängen (17c, 17d) des Strahlteilers (17) einen Bell-Zustand $\Phi^{(-)}$ aufweist, der beispielsweise in einem Quantenkryptographieprozess verwendet werden kann.

2. Ein Generator nach Anspruch 1, wobei die Übertragungsmittel erste und zweite Spiegel (14a, 14b) aufweisen, zum Reflektieren der Photonen auf den Strahlteiler (17).

3. Ein Generator nach Anspruch 1 oder 2, wobei erste und zweite Irisblenden (21 a, 21 b) mit den Polarisationsrotatoren (20a, 20b) verbunden sind.

4. Ein Generator nach einem der vorhergehenden Ansprüche, wobei der Strahlteiler erste und zweite Ausgänge (17a, 17d) aufweist, die mit ersten und zweiten Prismen (23a, 23b) verbunden sind, um die Photonen an deren Ausgängen entlang von Pfaden zu richten, die bezüglich der Prismen geneigt sind, und zwar um einen Winkel $\alpha$, abhängig von der Wellenlänge der Photonen; wobei die Ausgänge der Prismen verschiedene Kommunikationskanäle versorgen, die Eingänge unter verschiedenen Winkelpositionen bezüglich der Prismen aufweisen, um Photonen von unterschiedlicher Wellenlänge zu empfangen.

5. Ein Hocheffizienz-Verfahren zum Erzeugen von Paaren von Photonen, wobei die Paare von Photonen in einem Quantenprozess verwendet werden können, der parametrische Fluoreszenzprozesse nutzt, wobei das Verfahren die folgenden Schritte aufweist:

Richten eines Laser Pumpstrahls (12) auf einen Typ-Eins Kristall (3), um Paare von Photonen (f) mit ähnlicher Polarisation (e, o) an dem Ausgang (3b) des Kristalls zu erzeugen;
Richten der Photonen in jedem erzeugten Paar entsprechend in einen ersten und einen zweiten Polarisationsrotator (20a, 20b), wobei die Polarisationsrotatoren jeweils eine Drehung um 45° ausführen;
Richten (14a, 14b) der Photonen von dem ersten und zweiten Polarisationsrotator (20a, 20b) zu den Eingängen (17a, 17b) eines Strahlteilers (17), wobei der Strahlteiler eine Polarisation reflektiert, und die andere Polarisation transmittiert;
wobei der Zustand der Photonen an den Ausgängen des Strahlteilers (17) einen Bell-Zustand $\Phi^{(-)}$ aufweist, der beispielsweise in einem Quantenkryptographieprozess verwendet werden kann.

6. Ein Verfahren nach Anspruch 5, wobei der Schritt des Richtens der Photonen von dem ersten und zweiten Polarisationsrotator (20a, 20b) den Schritt des Reflektierens (14a, 14b) der Photonen auf den Strahlteiler (17) aufweist.

**Revendications**

**1.** Générateur à rendement élevé pour générer des paires de photons, qui peuvent être utilisés dans un procédé quantique utilisant des procédés de fluorescence paramétrique, comprenant :

- un cristal de type un (3) recevant un faisceau laser de pompage (12) à l'entrée et générant des paires de photons (f) de polarisation similaire (e, o) à la sortie (3b) ;
- des premier et deuxième rotateurs de polarisation (20a, 20b), qui reçoivent respectivement les photons dans chaque paire générée, chacun desdits rotateurs de polarisation effectuant une rotation de 45° ;
- un diviseur de faisceau (17), qui réfléchit une polarisation à ses entrées (17a, 17b), et transmet l'autre polarisation ;
- des moyens de transport (14a, 14b) pour diriger les photons à partir des premier et deuxième rotateurs de polarisation (20a, 20b) aux entrées (17a, 17b) dudit diviseur de faisceau (17) ;

l'état des photons aux sorties (17c, 17d) dudit diviseur de faisceau (17) comprenant un état de Bell $\Phi^{(-)}$ qui peut être utilisé, par exemple, dans un procédé de cryptographie quantique.

**2.** Générateur tel que revendiqué dans la revendication 1, dans lequel lesdits moyens de transport comprennent des premier et deuxième miroirs (14a, 14b) pour réfléchir les photons sur ledit diviseur de faisceau (17).

**3.** Générateur tel que revendiqué dans la revendication 1 ou 2, dans lequel des premier et deuxième iris (21a, 21b) sont reliés auxdits rotateurs de polarisation (20a, 20b).

**4.** Générateur tel que revendiqué dans l'une quelconque des revendications précédentes, dans lequel le diviseur de faisceau a des première et deuxième sorties (17a, 17d) reliées à des premier et deuxième prismes (23a, 23b) pour diriger les photons à leurs sorties le long de chemins inclinés, par rapport aux prismes, d'un angle $\alpha$ en fonction de la longueur d'onde des photons ; les sorties des prismes alimentant différents canaux de communication ayant des entrées dans différentes positions angulaires par rapport aux prismes pour recevoir des photons de différentes longueurs d'onde.

**5.** Procédé à rendement élevé de génération de paires de photons, qui peuvent être utilisés dans un procédé quantique utilisant des procédés de fluorescence paramétrique, comprenant les étapes qui consistent :

- à diriger un faisceau laser de pompage (12) sur un cristal de type un (3) pour générer des paires de photons (f) de polarisation similaire (e, o) à la sortie (3b) du cristal ;
- à diriger les photons dans chaque paire générée respectivement à des premier et deuxième rotateurs de polarisation (20a, 20b), effectuant chacun une rotation de 45° ;
- à diriger (14a, 14b) les photons à partir des premier et deuxième rotateurs de polarisation (20a, 20b) aux entrées (17a, 17b) d'un diviseur de faisceau (17), qui réfléchit une polarisation et transmet l'autre polarisation ;

l'état des photons aux sorties dudit diviseur de faisceau (17) comprenant un état de Bell $\Phi^{(-)}$ qui peut être utilisé, par exemple, dans un procédé de cryptographie quantique.

**6.** Procédé tel que revendiqué dans la revendication 5, dans lequel ladite étape qui consiste à diriger les photons à partir des premier et deuxième rotateurs de polarisation (20a, 20b) comprend l'étape qui consiste à réfléchir (14a, 14b) les photons sur ledit diviseur de faisceau (17).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 6430345 B